# EUROPÄISCHE PATENTSCHRIFT

(11) **EP 2 923 580 B1**
(45) Veröffentlichungstag und Bekanntmachung des Hinweises auf die Patenterteilung: **13.03.2019**
(21) Anmeldenummer: 14161735.7
(22) Anmeldetag: 26.03.2014
(51) Int. Cl.: A23C 15/02, A23D 7/04

(54) **Verfahren zur Erzeugung einer Butter mit verbesserter Streichfähigkeit**
Process for making a butter with improved spreadability
Procédé pour la preparation d'un beurre avec étalisation améliorée

(43) Veröffentlichungstag der Anmeldung: 30.09.2015
(73) Patentinhaber: DMK Deutsches Milchkontor GmbH, 27404 Zeven (DE)
(72) Erfinder: Wärner, Uwe, 27404 Elsdorf (DE); Hunfeld, Heinrich, 27211 Bassum (DE)
(74) Vertreter: Fabry, Bernd

(56) Entgegenhaltungen:
- EP-A2- 2 409 574
- US-A- 4 557 103
- US-A- 5 468 513
- US-A1- 2005 025 871
- US-A1- 2009 142 467

## Beschreibung

### GEBIET DER ERFINDUNG

Die Erfindung befindet sich auf dem Gebiet Butterungstechnologie und betrifft ein Verfahren zur Herstellung von streichfähiger und lagerstabiler Butter.

### STAND DER TECHNIK

Butter ist ein reines und natürliches Lebensmittel, das nicht nur wegen seines guten Geschmacks sondern auch wegen der enthaltenen Nährstoffe in der Ernährung verwendet wird. Aufgrund der enthaltenen fettlöslichen Vitamine A, D, E und beta-Carotin ist Butter ein bedeutender Vitaminspeicher und liefert darüber hinaus Mineralstoffe wie beispielsweise Calcium. Butter enthält zudem leicht verdauliches Milchfett. Bei Kühlschranktemperatur ist Butter allerdings fest. Sie lässt sich daher direkt nach dem Entnehmen aus dem Kühlschrank nur schwer verarbeiten. Dies ist nicht nur für den einzelnen Verbraucher ärgerlich, sondern insbesondere für Industriekunden von Nachteil, die mit kleinen Gebinden Vorlieb nehmen müssen, die sie selbst wieder aufkneten müssen, statt mit einem großen Container, aus dem sie direkt abfüllen könnten.

Um Butter auch bei niedrigen Temperaturen von etwa 7 bis 10 °C streichfähig zu machen sind aus dem Stand der Technik unterschiedliche Verfahren bekannt. Üblich ist die Zugabe von Zusätzen, die die Rheologie verbessern, wie Milch, Joghurt, niedrig schmelzenden Butterfraktionen oder erheblichen Mengen an Pflanzenfetten wie etwa Rapsöl. In diesem Zusammenhang sei beispielsweise auf die Druckschriften DE 20 2006 011 600 U1**,** DE 20 2011 102 569 U1 oder DE 20 2006 010 784 U1 (MEGGLE) verwiesen. Diese Additive führen jedoch in der Regel zu einer geschmacklichen Verfälschung und sind daher in vielen Fällen unerwünscht.

Im so genannten Microfix-Verfahren der Firma Benhil wird die Fettzubereitung in einem Homogenisator bzw. Knetwerk, vorzugsweise in einem Rotor-Statormischer nachbearbeitet. Durch den Eintrag mechanischer Energie wird das Kristallgitter aufgebrochen, was zu einer Abnahme der Viskosität führt. Von Nachteil ist indes, dass dieser Effekt nicht nachhaltig ist. Nach geraumer Zeit kommt es wieder zu Agglomerationen und die Butter verliert ihre Streichfähigkeit wieder.

Das Dokument US 5 468 513 A offenbart ein Verfahren zur Herstellung von Butterprodukten (konkret beansprucht wird "Honig-Butter" = honey butter). Die beschriebenen Produkte weisen an Fettgehalt im Bereich 9 bis 50 Gew.-% auf. Nachdem die Umkehrungsphase erfolgte und das Produkt auf eine Temperatur zwischen 0,5 °C und 18 °C abgekühlt wird, wird mechanische Rührenergie in die Zubereitung eingetragen, und gleichzeitig die Zubereitung mit einem Inertgas belüftet.

Das Dokument US 2005/0025871 A1 offenbart ein Verfahren zur Herstellung einer streichfähigen Butter, bei der Luftblasen 5% des Volumens des Produktes ausmachen. Die Energiezufuhr erfolgt mittels Umrühren, die gleichzeitige Belüftung des Produktes mit Luft werden, wird auch offenbart. Die Butter wird von 4 °C auf 29 °C erwärmt, bevor die Belüftung erfolgt.

Das Dokument US 4 557 103 offenbart eine Vorrichtung für das Verpacken von Produkten, die empfindlich gegen Hitze sind, z.B. Butter. Nach dem offenbaren Verfahren wird die Viskosität der Butter auf 16000-18000 Centipose bei Raumtemperatur eingestellt. Dann wird die Butter in einem Aerator zugeführt, in dem sie mit Stickstoff belüftet wird

Die Aufgabe der vorliegenden Erfindung hat somit darin bestanden, Lipidzubereitungen für den Nahrungsmittelbereich im Allgemeinen und Butter im Besonderen zur Verfügung zu stellen, die die eingangs beschriebenen Nachteile nicht aufweisen. Insbesondere sollte es nicht erforderlich sein, zur Verbesserung der Streichfähigkeit Stoffe beizumischen. Ein weiterer Schwerpunkt der Aufgabe hat zudem darin bestanden, die Streichfähigkeit der Zubereitungen nachhaltig zu verbessern, also auszuschließen, dass nach geraumer Lagerzeit wieder eine Abnahme der Streichfähigkeit festzustellen ist.

### BESCHREIBUNG DER ERFINDUNG

Gegenstand der Erfindung ist ein Verfahren zur Erzeugung einer Butter mit einem Fettgehalt von mindestens 80 und höchstens 90 Gew.-% mit verbesserter Streichfähigkeit, bei dem man in die Butter mechanische Rühr- und/Knetenergie einträgt und sie dabei mit Luft belüftet, wobei die Temperatur des Verfahrens zwischen 8 und 15 °C liegt, und die Belüftung bei einem Druck von 3 bis 5 bar durchgeführt wird.

Überraschenderweise wurde gefunden, dass beim Belüften des Homogenisators Gasbläschen in die Fehlstellen des Kristallgitters der Zubereitungen eingebaut werden, die eine spätere Agglomeration und damit Rekristallisation zuverlässig verhindern. Das Verfahren ist technisch einfach und in bestehenden Anlagen durchzuführen.

### LIPIDZUBEREITUNGEN

Das erfindungsgemäße Verfahren kann überall dort Einsatz finden, wo der Wunsch besteht, die Verarbeitungsfähigkeit von Butter bei niedrigen Temperaturen nachhaltig zu verbessern. Dies betrifft Butter, einschließlich Butterzubereitungen, wie etwa Kräuterbutter.

Die EU-Streichfettverordnung und die deutsche Butterverordnung definieren den Begriff Butter und ihre verschiedenen Sorten sehr genau. Demnach handelt es sich um ein Streichfett, das bei 20°C festbleibend und streichfähig ist, in Form einer festen, elastischen Emulsion, überwiegend vom W/O-Typ, das ausschließlich aus Milch und/oder bestimmten Milcherzeugnissen mit Fett als wesentlichem Bestandteil besteht. Andere zur Herstellung notwendige Stoffe dürfen zugesetzt werden, sofern diese Stoffe nicht dazu bestimmt sind, einen Milchbestandteil ganz oder teilweise zu ersetzen. Butter hat einen Fettgehalt von mindestens 80 und höchstens 90 Gew.-%, einen Höchstgehalt an Wasser von 16 Gew.-% sowie einen Höchstgehalt an fettfreier Milchtrockenmasse von 2 Gew.-%. Charakteristisch ist der hohe Gehalt des Fettes an gesättigten Fettsäuren (durchschnittlich 69 Gew.-%) und der niedrige Gehalt an mehrfach ungesättigten Fettsäuren (durchschnittlich 3 Gew.-%). Für zusammengesetzte Erzeugnisse mit einem Milchfettgehalt von mindestens 62 Gew.-% kann die Produktbezeichnung "Butterzubereitung" verwendet werden.

Dahingegen sind Mischstreichfette Erzeugnisse in Form einer festen, plastischen Emulsion, die aus festen und/oder flüssigen pflanzlichen und/oder tierischen Erzeugnissen gewonnen wurden, und einen Milchfettanteil von 10 bis 80 Gew.-% des Gesamtfettgehalts aufweisen.

In der vorliegenden Erfindung wird zusammenfassend für alle Erzeugnisse, die Butter enthalten unabhängig von ihrem Fettgehalt und dem Anteil an Milchfett der Begriff "Butter" verwendet.

Die Herstellung von Butter beruht auf der Abtrennung des Rahms von der Kuhmilch. Hauptbestandteil von Butter sind daher Milchfette, die sich vor allem aus Triglyceriden und Fettsäuren zusammensetzen. Die in der Butter vorkommenden Fettsäuren sind beispielsweise Buttersäure, Capronsäure, Caprylsäure, Caprinsäure, Laurinsäure, Myristinsäure, Myristolsäure, Pentadekansäure, Palmitinsäure, Palmitolsäure, Magerinsäure, Stearinsäure, Ölsäure, Elaidinsäure, Linolsäure und Linoleinsäure. Milchfett hat einen relativ hohen Gehalt an kurzkettigen gesättigten Fettsäuren und einen relativ geringen Gehalt an mehrfach ungesättigten Fettsäuren (z.B. Linolsäure, Linolensäure).

Die Schmelzpunkte der in Butter enthaltenen Milchfette liegen je nach Fettmolekül bei etwa 4 bis zu 50 °C. Anhand der unterschiedlichen Schmelzpunkte ist es möglich, Butter physikalisch durch Fraktionierung zu trennen, d.h. einzelne Fraktionen mit speziellen physikalischen Eigenschaften zu separieren.

Beim Fraktionieren von Milchfett wird entwässerte Butter erhitzt und dann wieder auf die gewünschte Kristallisationstemperatur abgekühlt. Die hochschmelzenden Triglyceride kristallisieren zuerst aus, der niedrig-schmelzende Anteil bleibt flüssig. Bei einer im Stand der Technik eingesetzten zweistufigen Fraktionierung werden beispielsweise im ersten Schritt die Fraktionen "Stearin" (Klarschmelzpunkt 41 bis 48 °C) und "Olein" getrennt. In einer zweiten Stufe können die beiden Fraktionen nochmals fraktioniert werden. Aus "Stearin" kann dann ein "Hart-Stearin" mit einem Schmelzpunkt von 46 °C und ein "Weich-Stearin" mit einem Schmelzpunkt von 36 °C gewonnen werden. Das "Olein" kann in "Midfraction" mit einem Schmelzpunkt von 26 °C und "Superolein" mit einem Schmelzpunkt von 12 °C oder tiefer aufgetrennt werden. Beim Fraktionieren reichern sich in der höher schmelzenden Phase Triglyceride aus langkettigen gesättigten Fettsäuren an, in der niedrigschmelzenden Phase mehr kurzkettige und ungesättigte Fettsäuren.

Es ist so möglich, den jeweiligen Anteil der verschiedenen Milchfette zu variieren, und dadurch die Eigenschaften eines Buttermischfetts zu verändern. Insbesondere der Schmelzpunkt eines Buttermischfetts kann durch Variation der Zusammensetzung der Milchfette reguliert werden. In der Zusammensetzung der vorliegenden Erfindung unterstützen fraktionierte Butterfette je nach Fraktion sowohl die Formbarkeit bei Kühlschranktemperaturen als auch die Formstabilität bei Raumtemperatur. Vorzugsweise weisen diese Butteröle eine Schmelztemperatur von etwa 8 bis etwa 12 °C auf.

### ZUSATZSTOFFE

Über das Maß hinaus, in dem das erfindungsgemäße Verfahren zu einer Verbesserung der Streichfähigkeit der Zubereitungen führt, können diese Zusätze enthalten, die eine weitere rheologische Verbesserung bewirken.

Um eine Zubereitung bereitzustellen, die die gewünschte Formbarkeit bei Raumtemperatur aufweist, kann die diese einen im Vergleich zu Butter höheren Anteil an Butterfraktionen mit niedrigem Schmelzpunkt enthalten. Der Anteil der zusätzlichen niedrigschmelzenden Butterfraktionen kann grundsätzlich nach Belieben so gewählt werden, dass die gewünschte Konsistenz der Butter erhalten wird. Die Auswahl der bestimmten Butterfraktionen und der Anteil, in dem sie in der erfindungsgemäßen Zusammensetzung enthalten sind, ist nicht begrenzt. Es liegt im Bereich des Wissens des Fachmanns, in Abhängigkeit von der Art der verwendeten Butterfraktionen und eventuellen weiteren in der Zusammensetzung enthaltenen Bestandteilen die Menge der eingesetzten Butterfraktionen so zu wählen, dass die gewünschte Konsistenz erhalten wird. So sind die niedrig-schmelzende Butterfraktionen in einer Menge von etwa 2 bis etwa 8 und vorzugsweise etwa 2,5 bis etwa 3,5 Gew.-% enthalten. Der Zusatz ist indes jedoch daran gebunden, dass nach Möglichkeit die geschmacklichen Eigenschaften der Butter nicht nachteilig verändert werden, insbesondere, dass der "butterige" Geschmack nicht verloren geht. Dies begrenzt den Einsatz an Butterfraktionen zur Rheologieverbesserung, so dass diese Maßnahme zur Erzielung der verbesserten und dauerhaften Streichfähigkeit wie schon eingangs erläutert alleine nicht ausreicht.

### VERFAHREN

Das erfindungsgemäße Verfahren kann grundsätzlich in handelsüblichen Homogenisatoren oder Knetwerken durchgeführt werden.

In Betracht kommen beispielsweise Produkte der Firma FASA, wie etwa vom Typ SHG, oder der Firma Benhil, wie etwa der Benhil Microfix 8471. Die Geräte bestehen in der Regel aus Edelstahl und weisen einen kontinuierlichen Durchsatz von bis zu 1500 kg/h auf. Die Homogenisatoren arbeiten bei Temperaturen im Bereich von 8 bis 15 °C. Die Homogenisierung, d.h. der mechanische Eintrag von Rühr- oder Knetenergie erfolgt nach dem Rotor-Stator-Prinzip mit rotierenden Blättern und Schnecken oder einer Kombination von beiden Elementen. Typischerweise enthalten die Homogenisatoren 12 bis 16 Flügelräder, die mit Geschwindigkeiten von etwa 500 bis etwa 900 und vorzugsweise etwa 700 bis 800 Upm betrieben werden. Die Schnecken drehen sich beispielsweise mit 12 bis 22 Upm.

Die Belüftung des Homogenisators erfolgt mit Luft. Es hat sich also besonders vorteilhaft erweisen, die Belüftung unter Druck durchzuführen, also Druckluft einzusetzen. Diese weist einen Druck von 3 bis 5 bar auf. Grundsätzlich kommen auch höhere Drücke in Frage, deren Anwendung nur deshalb weniger bevorzugt ist, weil es dazu dann besonderer Anlagen bedürfte, die in der Anschaffung teuer sind, während der Effekt annähernd der Gleiche ist. Die entsprechenden Geräte aus dem Stand der Technik können für die Belüftung problemlos nachgerüstet werden. Grundsätzlich reicht es aus, am Boden der Homogenisatoren Gasfritten anzubringen, so dass die Druckluft von unten durch die homogenisierende Masse gedrückt wird. Dies muss natürlich so geschehen, dass durch die Fritten weder Rotationsblätter noch Schnecken in ihrer Funktion beeinträchtigt oder beschädigt werden.

### BEISPIELE

### Vergleichsbeispiel V1

Eine konventionelle Butter wurde bei einer Eingangstemperatur von 8 °C und einer Verarbeitungstemperatur von 15 °C in einem Homogenisator der Firma Benhil (Typ Microfix 8471) batchweise 15 Minuten homogenisiert. Danach wurde die Streichfähigkeit bei 15 °C unmittelbar nach Entnahme aus dem Homogenisator, sowie nach Lagerung über 1 bis 4 Stunden auf einer Skala von (1) = gute Streichfähigkeit bis (4) praktisch fest beurteilt. Als Kontrollversuch wurde auch Butter ohne Homogenisierung einbezogen.

### Beispiele 1 bis 3

Das Vergleichsbeispiel V1 wurde wiederholt, jedoch über eine Gasfritte in den Homogenisator Luft mit (a) 1 bar, (b) 3 bar und (c) 5 bar eingeblasen. Anschließend wurden die drei so behandelten Buttertypen wie oben angegeben beurteilt. Die Ergebnisse sind in Tabelle 1 zusammengefasst.

**Tabelle 1**

| Streichfähigkeit von Butter | | | | | |
|---|---|---|---|---|---|
| **Streichfähigkeit** | **Kontrolle** | **V1** | **1** (Nicht**erfindungsgemäß)** | **2** | **3** |
| Sofort | 4 | 2 | 2 | 1 | 1 |
| Nach 1 h | 4 | 3 | 2 | 1 | 1 |
| Nach 2 h | 4 | 4 | 3 | 2 | 1 |
| Nach 4 h | 4 | 4 | 3 | 2 | 1 |

Die Beispiele und Vergleichsbeispiele zeigen deutlich, dass durch Belüftung des Homogenisators, insbesondere mit Hilfe von Druckluft die Rekristallisation der Butter zuverlässig verhindert wird. Einmal streichfähig gemacht, büßt die Butter diese Eigenschaft auch bei weiterer Lagerung nicht mehr ein.

## Patentansprüche

1. Verfahren zur Erzeugung einer Butter mit einem Fettgehalt von mindestens 80 und höchstens 90 Gew.-% mit verbesserter Streichfähigkeit, bei dem man in die Butter mechanische Rühr- und/Knetenergie einträgt und sie dabei mit Luft belüftet, wobei die Temperatur des Verfahrens zwischen 8 und 15 °C liegt, und die Belüftung bei einem Druck von 3 bis 5 bar durchgeführt wird.

2. Verfahren nach Anspruch 1, **dadurch gekennzeichnet, dass** die Belüftung in einem Homogenisator erfolgt.

3. Verfahren nach mindestens einem der Ansprüche 1 bis 2, **dadurch gekennzeichnet, dass** man die mechanische Rühr- oder Knetenergie über einen Rotor-Statormischer in die Butter einträgt.

## Claims

1. A process for the production of a butter with a fat content of at least 80 wt. % and at most 90 wt. % with improved spreadability, in which mechanical mixing and kneading energy is put into the butter and it is aerated with air at the same time, wherein the temperature of the process is between 8 to 15 °C, and the aeration is carried out a gas pressure of 3 to 5 bar.

2. Process according to claim 1, wherein the aeration takes place in a homogeniser.

3. Process according to at least one of claims 1 to 2, wherein the mechanical mixing or kneading energy is put into the butter via a rotor-stator mixer.

## Revendications

1. Procédé de fabrication d'un beurre ayant une teneur en matières grasses d'au moins 80% et d'au plus 90% en poids et présentant une capacité d'étalement améliorée, en ajoutant de l'énergie de brassage et de malaxage mécanique au beurre tout en l'aérant à une température de processus comprise entre 8 et 15 °C et l'aération est effectuée à une pression de 3 à 5 bars.

2. Procédé selon la revendication 1, **caractérisé en ce que** la ventilation est effectuée dans un homogénéisateur.

3. Procédé selon au moins l'une des revendications 1 à 2, **caractérisé en ce que** l'on entre l'énergie de brassage et de malaxage mécanique dans le beurre via un mélangeur rotor-stator.
